# EUROPEAN PATENT APPLICATION

(11) **EP 2 129 165 A2**
(43) Date of publication of application: **02.12.2009**
(21) Application number: 09161010.5
(22) Date of filing: 25.05.2009
(51) Int. Cl.: H04R 5/04, H04R 1/10, H04R 5/033

(54) **Wireless headset device capable of providing balanced stereo and method thereof**

(30) Priority: 23.05.2008 CN 200810109149
(71) Applicant: Lin, Pi-Fen, Keelung City 200 (TW)
(72) Inventor: Lin, Pi-Fen, Keelung City 200 (TW)
(74) Representative: Viering, Jentschura & Partner

(57) **Abstract**

A wireless headset device capable of providing balanced stereo. The wireless headset connects with a stereo output device for giving balanced sounds on both left and right channels. The wireless headset has an encoder/decoder module which decompresses a digital audio package received from a wireless transceiver device into a stereo signal, and delivers it to a connection detecting module. The connection detecting module determines whether the wireless headset connects with the stereo output device. If the answer is negative, the stereo signal will be outputted by a single channel speaker of the wireless headset; otherwise, the signal will come out from the stereo output device which has a two-channel speaker.

## Description

### BACKGROUND OF THE INVENTION

### 1. Field of the Invention

The present invention is related to a wireless headset, and more particular to a wireless headset device capable of providing balanced stereo and a method thereof.

### 2. Description of Related Art

Wireless communication technology is becoming more mature and convenient by the day, for example Bluetooth Communication is currently widely used for short range wireless communication technology applications; now consider in conjunction with mobile communication equipment functionality which is becoming more and more versatile, then it is easy to realize Bluetooth Technology are not only used for data synchronization, but are even more often used as a wireless transceiver agent between a wireless headset microphone and a mobile communication equipment (i.e. mobile phone). Especially consider that the current market has developed many brands of multi-functional mobile phone that can also listen to music, user can thus utilize single ear (single channel) hang-type Bluetooth hands-free headset, which can be used for in-coming Bluetooth mobile phone communication, and also can be used to listen to music coming from a Bluetooth mobile phone.

Established to encourage, promote, and support Bluetooth Technology development, the Bluetooth Special Interest Group (Bluetooth SIG) specified the Advanced Audio Distribution Profile (A2DP), which defines how high quality audio can be streamed from one device to another over a Bluetooth connection, so that a Bluetooth equipment user can use a Bluetooth headset to listen to high quality music, as long as both the user's mobile phone and the wireless headset support A2DP. This kind of Bluetooth equipment can supply users with stereo output, which surpasses conventional mobile phones that can only broadcast in mono.

However, the typical Bluetooth headset today consists of a single ear (single channel) hang-type headset, which by its physical nature has only one headset accessory for a single ear audio output, so even if the mobile phone and headset both support A2DP, the user will still not enjoy the full range of high audio quality music. Due to this limitation, the current market developed a headset that connects to both ears, and output the audio in both ears in a stereo headset device, such as the device disclosed by Republic of China Patent number M299999 "Duel Mode Headset Device", which aims to solve the limitation of single ear (single channel) Bluetooth headset by connecting an extra single ear headset via a wire to the original single ear Bluetooth headset, thus achieving duel ear audio output.

Although this method solves the limitation of single ear headset, but considering the solution: "The headset includes a first headset, a second headset, and a transmission line. The first headset includes a first housing; an interface module for receiving an audio signal; a signal processing module for separating the audio signal into a first channel signal and a second channel signal; an amplifying circuit for respectively amplifying the first channel signal and the second channel signal to generate a first amplified signal and a second amplified signal; and a first speaker for outputting audio according to the first amplified signal. The second headset includes a second housing; and a second speaker for outputting audio according to the second amplified signal. The transmission line is for transmitting the second amplified signal to the second headset;" the audio balance produced by this method from the audio channel output will be offset, because the first headset and second headset are made separately then tied together by a transmission line, which means the first amplified signal will arrive and be output by the first headset speaker first, while the second amplified signal will travel by the transmission line then arrive and be output by the second headset speaker with a delay. Furthermore, the amplifying circuit amplifies the first channel signal and the second channel signal separately via the signal processing module in the first headset, which mean there would be a further difference between the two audio output, such as one side would be louder and the other side would be more quiet, or one side would be more clear and the other side would have more noise, which result in inferior output audio quality when compared to single piece duel ear stereo headset, and would more prone to cause user with audio discomfort; further consider the second connected ear piece headset have to be used in cooperation with the original first Bluetooth headset, if the second headset is not connected to the first headset, it would serve no audio function, which further limits this type of stereo headset's functionality. Due to the analysis described above, regarding how to produce wireless headset device capable of producing balanced and high quality stereo sound, there is certainly room for improvement and the limitation should be further analyzed.

### SUMMARY OF THE INVENTION

In order to improve upon the limitation described above and improve the product currently on the market place, the inventor proposes a simple wireless headset device capable of providing balanced stereo for a wireless headset.

Such wireless headset device can connect a stereo output device in order to achieve the goal of stereo audio output. The wireless headset device includes - a communication module, a connection detection module, a first speaker unit and an audio output unit. The communication module includes a second transceiver module and an encoder/decoder module: the wireless headset device via the second transceiver module can transmit and receive information with the first transceiver module of an audio transceiver device, and thus establish communication with the audio transceiver device. The encoder/decoder module is used to decompress a digital audio package received from a second transceiver module into a stereo signal, whereby such a stereo signal can be decoded as a first channel signal or a second channel signal.

Furthermore, the connection detection module is connected with the first speaker unit and the audio output unit of the wireless headset device, then according to whether the audio output unit has produced a connection signal or not, determines if the stereo signal should be output by the first speaker unit or output to the audio output unit.

The stereo output device connected with the wireless headset device includes, an audio input unit, a second speaker unit, and a third speaker unit. The audio input unit establishes communication with the wireless headset device via the audio output unit, and receives the stereo signal that is output by the audio output unit of the wireless headset device; the above described connection signal is produced when the audio output unit and the audio input unit are connected. The audio input unit respectively sends the received stereo signals first and second channel signal to the second and third speaker unit for output.

In order to provide a wireless headset device capable of providing balanced stereo, the present invention further provides a method for a wireless headset to output a stereo signal: a wireless headset device first receives a digital audio package from an audio transceiver device, then decompresses the package to a stereo signal, then determines via a connection detection module whether the wireless headset device is connected to a stereo output device, if not, then the stereo signal will be outputted by a mono speaker unit of the wireless headset device; if yes, then the stereo signal will be transmitted to the stereo output device, and outputted through the stereo audio device as a stereo signal via a second speaker unit and a third speaker unit simultaneously.

In view of the method and device mentioned above, by connection to a stereo output device with dual speaker unit, and by a connection detection module detecting connection status between the speaker units, the proper audio output channel can be achieved, which can be used for wireless headset device that has only a single speaker but supports stereo functionality, and thus avoid the limitation of audio output by the stereo becoming unbalanced.

Furthermore, because the wireless headset device only connects with the stereo output device, not only is the comfort of audio quality increased when listening to stereo audio, there will be no negative effect on the wireless headset device's original function of data transmission; and, for usability convenience, many single side speaker unit of wireless headset device has hands-free design, which also is not affected, and user can still enjoy the hands-free functionality convenience.

Furthermore, because the stereo output device functions by receiving an audio signal and then broadcast accordingly, so that when the stereo output device is not connected with the wireless headset device, the stereo output device can function with other device with common connector (as shown by Fig 4 's 2251 paired with 3001, or Fig 5 's 2253 paired with 3003, or Fig 6 's 2251, 3001, 2253, and 3003 combination), or be directly connected with other audio/visual transceiver device for sound output, and is not limited to connect only with wireless headset device, thus the device possesses a high degree of practicality, and at the same time reduces the need to buy a separate stereo output device for each kinds of audio device.

This method to achieve stereo output by externally connecting a stereo output device is completely different from the conventional method of simply connecting two mono output devices together by a wire, and audio quality, practicality, and convenience of the disclosed method are improved compared to the conventional method.

### BRIEF DESCRIPTION OF THE DRAWINGS

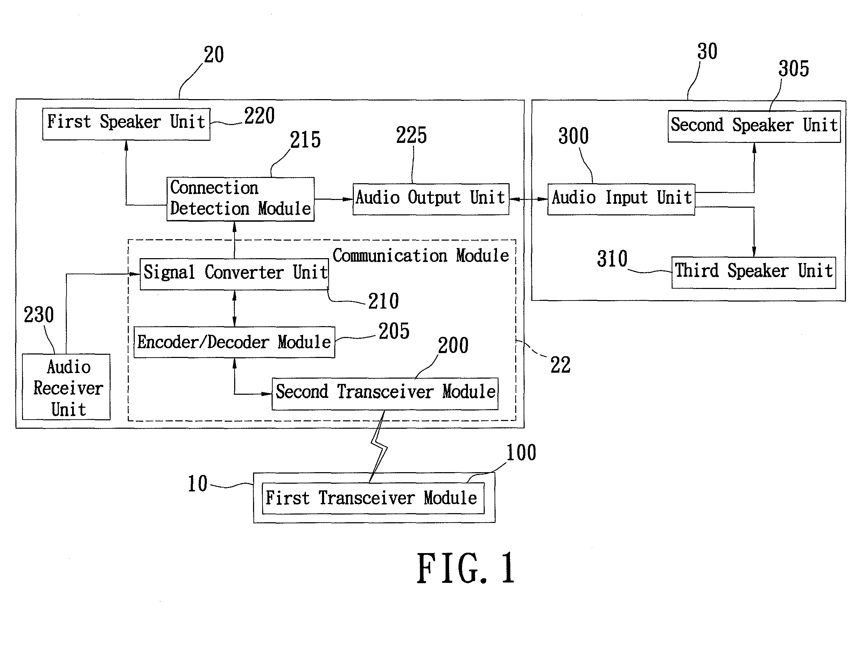

Fig. 1 shows an embodiment of a schematic diagram for a wireless headset device capable of providing balanced stereo according to the present invention;

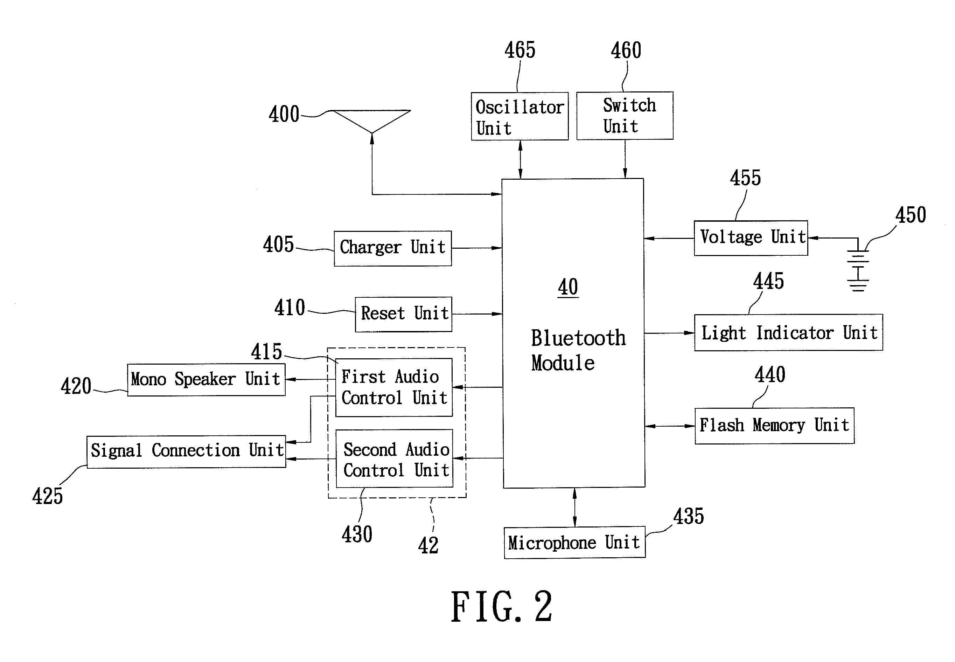

Fig. 2 shows another embodiment of a schematic diagram for a wireless headset device capable of providing balanced stereo according to the present invention;

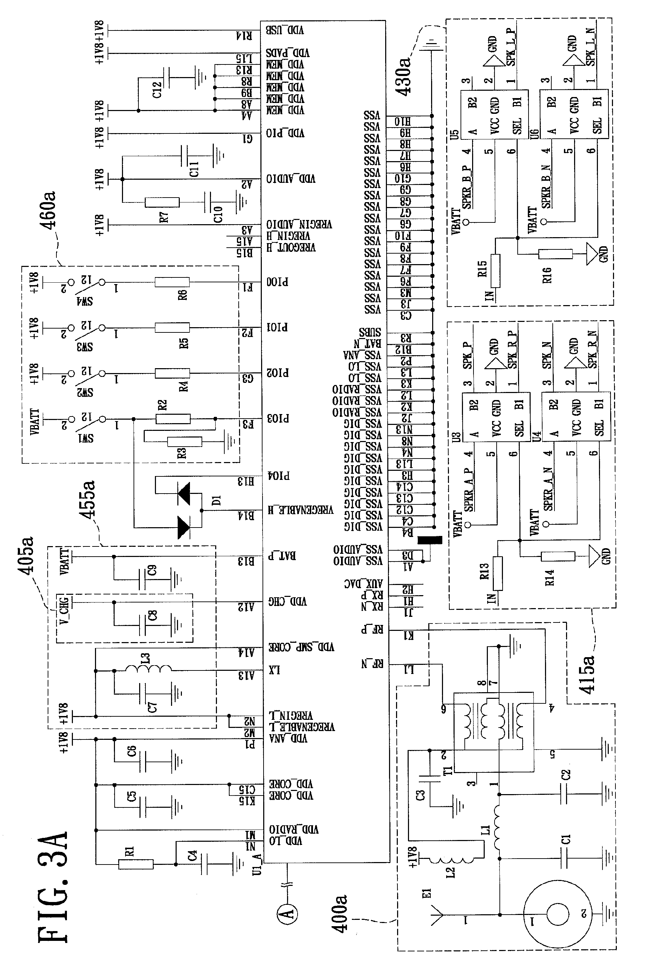

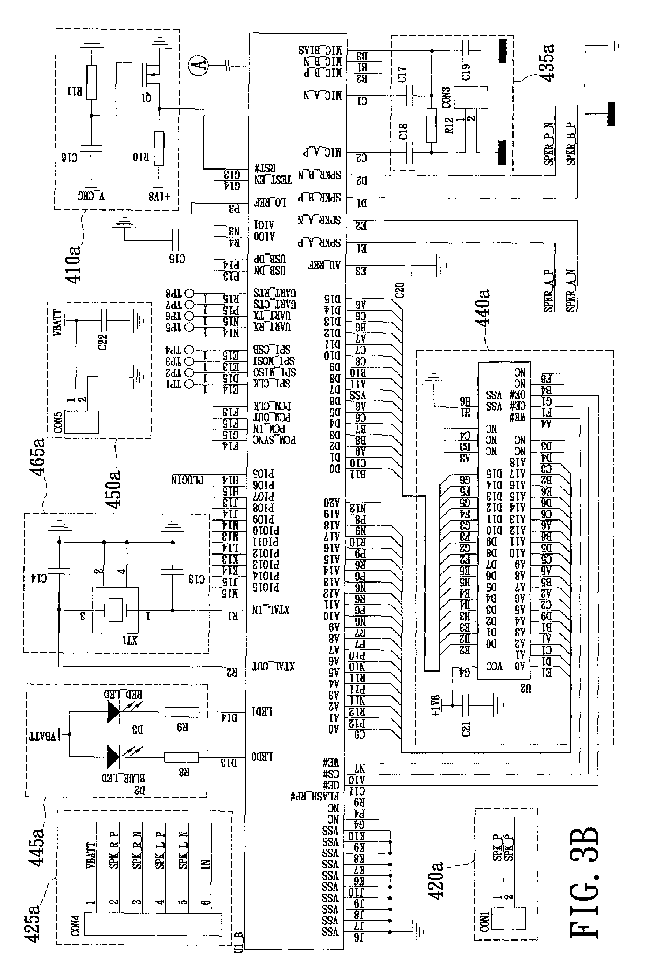

Fig. 3A and Fig. 3B shows an embodiment of a circuit diagram for a wireless headset device capable of providing balanced stereo according to the present invention;

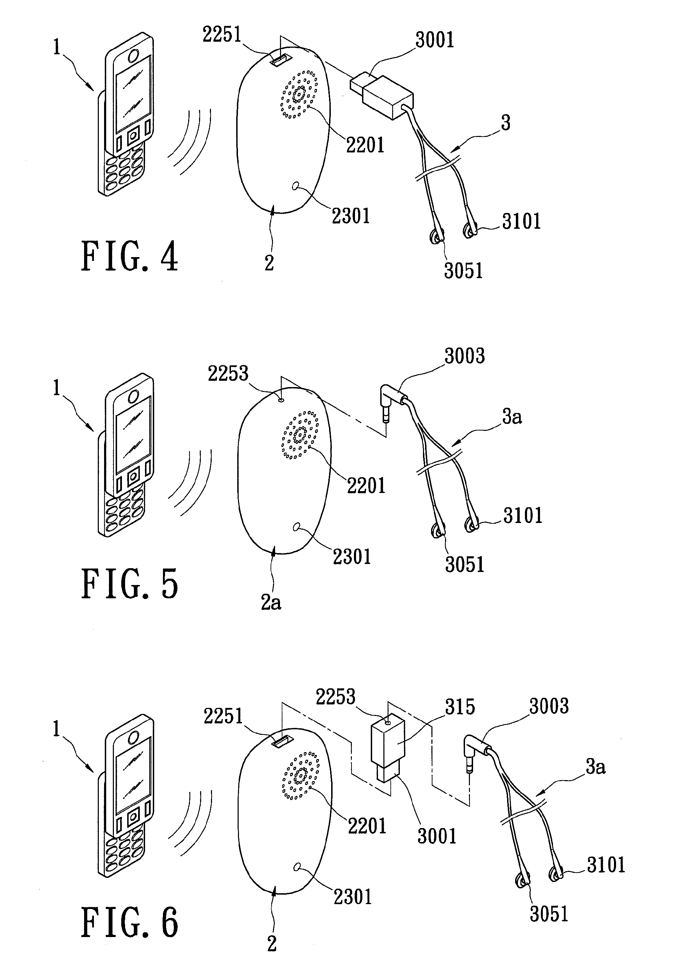

Fig. 4 shows an embodiment of a structure connection representation diagram for a wireless headset device capable of providing balanced stereo according to the present invention;
Fig. 5 shows another embodiment of a structure connection representation diagram for a wireless headset device capable of providing balanced stereo according to the present invention;
Fig. 6 shows yet another embodiment of a structure connection representation diagram for a wireless headset device capable of providing balanced stereo according to the present invention;

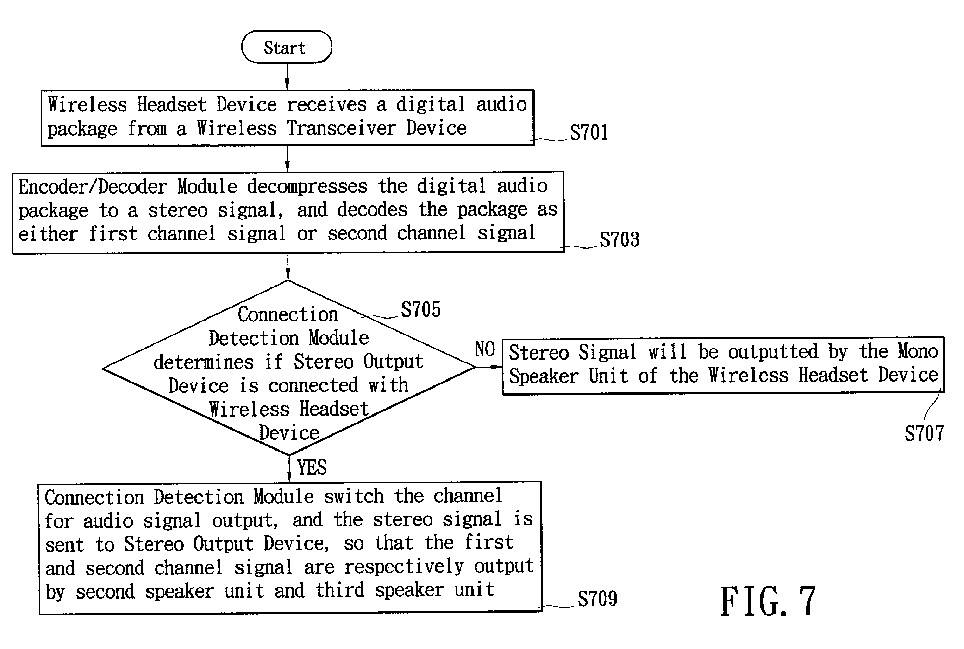

Fig. 7 shows a method flow chart for a wireless headset device capable of providing balanced stereo according to the present invention;

### DETAILED DESCRIPTION OF THE PREFERRED EMBODIMENTS

In order to further explain the present invention's object, so that reader can easier understand the present invention's technique, the below embodiments will be used in conjunction with figures to explain by example regarding the present invention.

Fig. 1 is an embodiment of a schematic diagram for a wireless headset device capable of providing balanced stereo according to the present invention: the wireless headset device 20 via wireless transmission technology (i.e. IEEE 802.11b) receives audio signals from audio transceiver device 10, and connects to Stereo Output Device 30 in order to output the audio signal transmitted from the audio transceiver device 10.

Wireless headset device 20 includes - a communication module 22, a connection detection module 215, a first speaker unit 220, an audio output unit 225, and an audio receiver unit 230. Communication module 22 further includes a second transceiver module 200 for transmitting and receiving an audio signal, an encoder/decoder module 205 used to respectively encode (compress) or decode (decompress) the audio signal transmitted or received from the second transceiver module 200, and a signal converter unit 210 that will convert the decoded digital audio signal into an analog audio signal. The analog audio signal produced by the Communication module 22 will then be send to the connection detection module 215, and the connection detection module 215 will determine whether the audio signal should be sent to the first speaker unit 220 or to the audio output unit 225 for output.

Wireless headset device 20 via the second transceiver module 200 transmit and receive signal from first transceiver module 100 of audio transceiver device 10, and thus establishes communication with the audio transceiver device 10.

The Stereo output device 30 includes an audio input unit 300, a second speaker unit 305, and a third speaker unit 310, the stereo output device 30 via audio input unit 300 establishes communication with the audio output unit 225 of the wireless headset device 20, thereby receiving audio signal output by the wireless headset device 20, and transmitting the audio signal to the second speaker unit 305 and the third speaker unit 310.

In the present embodiment, the second transceiver module 200 of the communication module 22 receives an encoded digital audio package from audio transceiver device 10, and send the package to the encoder/decoder module 205, so that the digital audio package can be decompressed back to a stereo audio signal.

The stereo audio signal is currently still a digital audio signal, and can be either a first channel signal or a second channel signal, used to create stereo sound effect. In order to adjust the audio signal so that it is fit for broadcast, a signal converter unit 210 coverts the stereo audio signal into analog audio signal. After the audio is converted to analog signal, it is send to connection detection module 215 to determine whether stereo output device 30 is connected with wireless headset device 20: when audio input unit 300 is connected with audio output unit 225, the audio output unit 225 will produce a connection signal, and the connection detection module 215 will detect existence of the connection signal, in order to determine whether the wireless headset device 20 and the stereo output device 30 is connected. If the two are not connected (no detection of connection signal), then the connection detection module 215 will send the stereo audio signal that has been converted to analog audio signal to the first speaker unit 220 for output. However because wireless headset device 20 only has a single (mono) speaker unit at this point, so that even if wireless headset device 20 support stereo output, from the first speaker unit 220 alone the user would only hear mono audio output.

On the other hand, if connection detection unit 215 determines that the wireless headset device 20, through audio output unit 225, is connected to the second speaker unit 305 and the third speaker unit 310 of stereo output device 30, then connection detection module 215 would switch stereo audio output channel to audio output unit 225, which result in stereo audio signal to be send from audio output unit 225 to stereo output device 30.
stereo output device 30 via audio input unit 300 receive stereo audio signal send by the audio output unit 225 of the wireless headset device 20, and respectively send stereo audio signal's first channel signal and second channel to the second speaker unit 305 and third speaker unit 310, so that user can directly utilize stereo output device 30 which posses dual (left and right) channel in order to listen to the full ranged and balanced stereo.

The wireless headset device 20 also includes audio receiver unit 230, for receiving an external audio input, such as a user's voice, and the external audio input will be send to the signal converter unit 210 to be converted to a digital audio signal, then send to encoder/decoder module 205 to be encoded as package data, then through the second transceiver module 200 transmitted to the audio transceiver device 10 of the intended receiver.

Fig. 2 is another embodiment of a schematic diagram for a wireless headset device capable of providing balanced stereo according to the present invention, and Fig. 3A and Fig. 3B together is the present embodiment's circuit diagram for a wireless headset device capable of providing balanced stereo according to the present invention, in order to avoid the circuit diagram appearing overly small and cause inconvenience in reading, so the present embodiment's circuit diagram will be split into two parts (U1 A and U1 B), and respective displayed in Fig. 3A and Fig. 3B, but in actuality please understand that the component modules belongs on the same circuit chip.

In the present embodiment, the wireless headset device 20 via Bluetooth technology achieves wireless transmitting and receiving functionality of wireless Bluetooth headset, which includes a Bluetooth module 40, charger unit 405, reset unit 410, connection detection module 42, mono speaker unit 420, signal connection unit 425, microphone unit 435, flash memory unit 440, light indicator unit 445, battery unit 450, voltage unit 455, switch unit 460, and oscillator unit 465, wherein the connection detection module 42 further includes a first audio control unit 415 and a second audio control unit 430.

The headset through the antenna unit 400 of the Bluetooth module 40 receives a digital audio package and thus communicates with audio transceiver unit 10, and the Bluetooth module 40 decode the received digital audio package to a digital stereo signal (which includes a left channel signal and a right channel signal), and then convert the stereo signal into an analog stereo signal (still with a left channel signal and a right channel signal). The antenna unit 400's circuit diagram can be referenced as 400a of Fig 3A (The below mentioned circuit diagram please reference Fig 3A and 3B).

The second audio control unit 430 of the connection detection module 42 sends the left channel signal to the signal connection unit 425; and the first audio control unit 415 via multiplexer controls whether to send the right channel signal to the mono speaker unit 420 or to the signal connection unit 425. If the wireless Bluetooth headset is not connected to stereo output device 30, then first audio control unit 415 will send the right channel signal to the mono speaker unit 420 for output; but on the other hand if the two devices are connected, then the first audio control unit 415 will send the right channel signal to signal connection unit 425, to complement the left channel signal that was also send to the signal connection unit 425, and the signal connection unit 425 will simultaneously switch the dual channel signal to the externally connected stereo output device 30, thus the right channel signal will be output from the right side speaker of the stereo output device 30 (such as second speaker unit 305), and the left channel signal will be output from the left side speaker of the stereo output device 30 (such as third speaker unit 310). The circuit diagram of schematic diagram component 415 to 430 can respectively be reference in component 415a to 430a of Fig 3A and 3B.

Microphone unit 435 provides a biasing circuit the audio receiver unit 230 needs for receiving audio signals, and the associated circuit diagram can be referenced in 435a of Fig 3B. Charger unit 405 provide voltage for Bluetooth module 40, for when the battery is charging, please reference 405a of Fig 3A; reset unit 410 is for resetting the Bluetooth module 40 while charging, please reference 410a of Fig 3B. Flash memory unit 440 is for storing the software of Bluetooth module 40, please reference 440a of Fig 3B; there is also the light indicator unit 445 which control the LED to indicate various status regarding the wireless Bluetooth headset, please reference 445a of Fig 3B; battery unit 450 supply the overall required battery for the wireless Bluetooth Headset while it is functioning, please reference 450a of Fig 3B; voltage unit 455 uses the voltage supplied by battery unit 450, and provide the Bluetooth module 40 with the necessary operating voltage, please reference 455a of Fig 3A.

Furthermore, there is the switch unit 460 and the oscillator unit 465, wherein the switch unit 460 provides control for the wireless Bluetooth headset that require switching or adjustment, such as Power on/off, device pairing, volume adjustment, etc. Please reference 460a of Fig 3A; the oscillator unit 465 provides the clock needed by the Bluetooth module 40, please reference 465a of Fig 3B.

Fig. 4 is an embodiment of a structure connection representation diagram for a wireless headset device capable of providing balanced stereo according to the present invention, please view in conjunction with Fig 1.

The present embodiment is a wireless Bluetooth headset device, which includes a single ear (single channel) Bluetooth headset 2 that supports A2DP Bluetooth stereo output and a dual channel (dual ear) stereo headset 3. Single ear Bluetooth headset 2 via second transceiver module 200 of communication module 22, transmit and receive data with first transceiver module 100 of mobile phone 1, thus achieve communication with mobile phone 1. The communication module 22 is a Bluetooth wireless communication module. Mobile phone 1 which is capable of broadcasting music sends the music audio package to the single ear Bluetooth headset 2, then encoder/decoder module 205 decodes the package, and decompress it back to stereo audio signal, and using A2DP's decoder standard calculate the first channel signal and second channel signal needed for the stereo, and then through signal converter unit 210 convert the stereo audio signal to analog for output by speaker.

Before the converted stereo audio signal is output to speaker, connection detection module 215 will detect if the single ear Bluetooth headset 2 is connected to the dual channel stereo headset 3 via USB female connector 2251 and USB male connector 3001, if not, then the stereo audio signal will only be output from the speaker 2001 of single ear Bluetooth headset 2 as mono; on the other hand if the single ear Bluetooth headset 2 and the dual channel stereo headset 3 are connected by the USB interface, then the stereo audio signal will be send to the dual channel stereo headset 3, and the first channel signal (left) and second channel signal (right) of the stereo audio signal will respectively be output by the second speaker 3051 and the third speaker 3101.

When user plug dual channel stereo headset 3 into the single ear Bluetooth headset 2, and use the dual channel stereo headset 3 to listen to audio output of mobile phone 1, not only can the user experience the natural spatial effect (left and right direction) of stereo, but the original single ear Bluetooth headset 2 can be clipped on the collar, or via maintaining a reasonable length of the headset wire, the microphone 2301 that was built-in can still be used to input audio signal, so that the hands-free functionality is still maintained. Furthermore, if the single ear Bluetooth headset 2 and the duel channel stereo headset 3 are connected, when mobile phone 1 receives a phone call, the sound can be output just like the music (digital audio package) described previously, so that user can use the dual channel headset 3 to receive phone call, and then use the microphone 2301 of the single ear Bluetooth headset 2 to speak. However understand that the audio transceiver device 10 of the system is not limited to mobile phone system, it can be any other audio transceiver device that is connected wirelessly, such as MP3, MP4 music broadcasting device.

Also, the above described method of connecting single ear Bluetooth headset 2 and dual channel stereo headset 3 is not limited to connecting USB male connector 3001 with USB female connector 2251, of course there are other common interface for connecting, transmitting, and receiving audio signal, for example: Fig 5 shows a common TRS female connector 2253 of another single ear Bluetooth headset 2a connected with an TRS male connector 3003 (tip-ring-sleeve connector, are referred as phone plug in US and jack plug in UK, 3.5mm TRS connector is commonly used by both mono and stereo headset) of another dual channel stereo headset 3a; or for example as shown by Fig 6, via an adapter 315 provide an USB male connector 3001 and a TRS female connector 2253, so that the TRS male connector 3003 of dual channel stereo headset 3a can first connect to TRS female connector of adapter 315, then the USB male connector 3001 of adapter 315 can connect to the USB female connector 2251 of single ear Bluetooth headset 2, which can be convenient since TRS male connector 3003 is very common.

In order to avoid undue overlapping of device component, the above mentioned single ear Bluetooth headset 2 and 2a from Fig 4 to 6 was not drawn with the single ear hook, since the single ear hook itself is outside the scope of the present invention.

Fig. 7 is an embodiment of a method flow chart for a wireless headset device capable of providing balanced stereo according to the present invention: the wireless headset device first receive a digital audio package from audio transceiver device 10 (S701), then the encoder/decoder module 205 decompresses the digital audio package to a stereo signal, and decodes the package as either a first channel signal or a second channel signal (S701); then the connection detection module 215 determines if stereo output device 30 is connected with the wireless headset device 20 (S705); if the two are not connected, then the stereo signal will be output by the first speaker unit 220 (a.k.a. mono/single channel speaker) of the wireless headset device 20 (S707); otherwise if the two are connected, then the connection detection module 215 would switch the channel for audio signal output, and the stereo signal is sent to the stereo output device 30, so that the first and second channel signal are respectively output by the second speaker unit and the third speaker unit (S709).

Wherein, after the stereo signal has been decoded as first channel signal and second channel signal, there would be a further step of sending the signal to a signal converter unit 210 to be converted to analog signal, in order for the first speaker unit 220 or the dual channel stereo output device 30 to output.

Furthermore, in the step where connection detection module 215 determines whether the two devices are connected (S705), the determination is based on whether a connection signal is received, the connection signal in turn is produced when an audio input unit 300 of stereo output device 30 is connected with an audio output unit 225 of the wireless headset device 20.

As per the detailed descriptions and embodiments described above, a simple and effective method has been disclosed, which allows a wireless headset with mono channel to output stereo sound effect, and the stereo signal produced according to the present invention's technique, will not cause right and left channel to have unbalanced sound quality or uneven volume, and can allow for user desire to be plugged in (for stereo sound) or taken off (for mono sound), which greatly increase the usability of single ear (single channel) hang type headset's usability.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless headset device capable of providing balanced stereo, for wireless reception of audio signals from an audio transceiver device of a first transceiver module, comprises:
a communication module, which comprises:
a second transceiver module, connected via wireless transmission technology to the first transceiver module, for transmitting and receiving a digital audio package from and to the audio transceiver device to the wireless headset device, and
an encoder/decoder module, connected with the second transceiver module, for decompressing the digital audio package received from a second transceiver module into a stereo signal, whereby the stereo signal may be decoded into a first channel signal or a second channel signal; and
a first speaker unit, for outputting the stereo signal;
an audio output unit, for producing a connection signal and outputting the stereo signal to a stereo output device; and
a connection detection module, connected with the first speaker unit and the audio output unit, for receiving the stereo signal decompressed by the encoder/decoder unit, and for detecting whether the audio output unit has produced the connection signal, in order to determine whether the stereo signal should be send to the first speaker unit or to the audio output unit for output.

2. The wireless headset device as claimed in claim 1, wherein the stereo output device comprises:
an audio input unit, establishing communication with the wireless headset device via connection with the audio output unit, and receiving the stereo signal that is outputted by the audio output unit;
a second speaker unit, for receiving the stereo signal sent by the stereo input unit, and output the first channel signal of the stereo signal; and
a third speaker unit, for receiving the stereo signal sent by the stereo input unit, and for outputting the second channel signal of the stereo signal;
wherein the audio output unit produces the connection signal, when the audio input unit is connected to the audio output unit.

3. The wireless headset device as claimed in claim 1, wherein the output of the stereo signal switches from the first speaker unit to the audio output unit when the connection detection module detects the connection signal produced by the audio output unit.

4. The wireless headset device as claimed in claim 1, wherein the first audio control unit causes the first channel signal to be outputted by the audio output signal or by the first speaker unit via a multiplexer,

5. The wireless headset device as claimed in claim 1, wherein the communication module comprises:
a signal converter unit, connected between the encoder/decoder module and the connection detection module, for converting the stereo signal decoded by the encoder/decoder module from a digital signal to an analog signal.

6. The wireless headset device as claimed in claim 1, which further comprises:
an audio receiver unit, for receiving an external audio input, whereby the external audio input will be send to the signal converter unit to be converted into a digital signal; and
a microphone unit, for providing a bias circuit that the audio receiver unit needs for receiving the external audio input.

7. The wireless headset device as claimed in claim 6, wherein the encoder/decoder module receives the digital signal and encodes it as the digital audio package, then through the second transceiver module the digital audio package is transmitted to the audio transceiver device by the encoder/decoder module.

8. The wireless headset device as claimed in claim 1, wherein the communication module is a Bluetooth module.

9. The wireless headset device as claimed in claim 2, wherein the audio output unit is a USB female connector, and the audio input unit is a USB male connector.

10. The wireless headset device as claimed in claim 2, wherein the audio output unit is a TRS female connector, and the audio input unit is a TRS male connector.

11. The wireless headset device as claimed in claim 2, which further comprises:
an adapter, which serves for connecting the audio output unit and the audio input unit, wherein one side of the adapter connects with the audio output unit and the other side connects to the audio input unit.

12. The wireless headset device as claimed in claim 11, wherein
the side of the adapter connecting to the audio output unit has a USB male connector, and the side of the adapter connecting to the audio input unit has a TRS female connector, the audio output unit has a USB female connector, and the audio input unit has a TRS male connector.

13. The wireless headset device as claimed in claim 1, wherein the audio transceiver device is a mobile phone or a music broadcasting device.

14. A Method for a wireless headset device capable of providing balanced stereo, which comprises:
(a) a wireless headset device receiving a digital audio package from an audio transceiver device;
(b) decompressing of the digital audio package and producing a stereo signal, which includes a first channel signal and a second channel signal;
(c) determining whether the wireless headset device is connected to a stereo output device;
(d) outputting the stereo signal by the speaker unit of the wireless headset device if the wireless headset device is not connected to the stereo output device; and
(e) outputting the stereo signal by the stereo output device if the wireless headset device is connected to the stereo output device.

15. The method as claimed in claim 14, comprising the following step immediately following step (b):
A signal converter unit converts the stereo signal from digital to analog.

16. The method as claimed in claim 14, wherein step (c) further comprises the following steps:
A connection detection module determines whether the audio output unit of the wireless headset device is connected with an audio input device of the stereo output device and produces a connection signal;
If no connection signal is produced, it is determined that the wireless headset device is not connected with the stereo output device; and
If a connection signal is produced, it is determined that the wireless headset device is connected with the stereo output device.

17. The method as claimed in claim 14, wherein step (e) further comprises the following steps:
performing a first audio control unit to cause the first channel signal to be outputted by the second speaker unit of the stereo output device, and performing a second audio control unit to cause the second channel signal to be outputted by the third speaker unit of the stereo output device.

18. A wireless headset device capable of providing balanced stereo, for wireless reception of audio signals from an audio transceiver device of a first transceiver module, comprises:
a communication module, which comprises:
a second transceiver module, connected via wireless transmission technology to the first transceiver module, for transmitting and receiving a digital audio package from and to the audio transceiver device to the wireless headset device;
an encoder/decoder module, connected with the second transceiver module, for decompressing the digital audio package received from a second transceiver module into a stereo signal, whereby the stereo signal may be decoded into a first channel signal or a second channel signal; and
an antenna unit, wherein the second transceiver module transmits and receives the digital audio package from and to the audio transceiver device through the antenna unit;
a first speaker unit, for outputting the stereo signal;
an audio output unit, for producing a connection signal and outputting the first channel signal to a stereo output device;
a first audio control unit, connected with the first speaker unit and the audio output unit, for receiving the first channel signal decompressed by the encoder/decoder unit, and causing the first channel signal to be outputted by the audio output unit or by the first speaker unit which depends on whether the connection signal is produced or not; and
a second audio control unit, connected with the audio output unit, for causing the second channel signal to be outputted by the audio output when the second channel signal is received.
